Europäisches Patentamt

European Patent Office

Office européen des brevets

(19)

(11) Publication number: **0 118 052**
**B1**

(12) **EUROPEAN PATENT SPECIFICATION**

(45) Date of publication of patent specification: **26.07.89**    (51) Int. Cl.⁴: **B 25 J 15/04**

(21) Application number: **84101275.0**

(22) Date of filing: **08.02.84**

(54) **Robot object manipulator with changeable finger tools.**

<table>
<tr><td>

(30) Priority: **02.03.83 US 471569**

(43) Date of publication of application:
**12.09.84 Bulletin 84/37**

(45) Publication of the grant of the patent:
**26.07.89 Bulletin 89/30**

(84) Designated Contracting States:
**CH DE FR GB IT LI NL SE**

(56) References cited:
**FR-A-1 278 858**
**FR-A-1 328 613**
**US-A-3 075 165**

**IBM TECHNICAL DISCLOSURE BULLETIN, vol.
24, no. 7A, December 1981, pages 3273-3275,
New York, US; A.W. CUMMINS et al.:
"Removable robotic devices"**

</td><td>

(73) Proprietor: **International Business Machines
Corporation
Old Orchard Road
Armonk, N.Y. 10504 (US)**

(72) Inventor: **Leverett, Theodore Wilcox
3621 Curtland Drive
Concord, NC 28025 (US)**
Inventor: **Musits, Bela
180 Suburban Drive
Concord, NC 28025 (US)**

(74) Representative: **Atchley, Martin John
Waldegrave
IBM United Kingdom Limited Intellectual
Property Department Hursley Park
Winchester Hampshire SO21 2JN (GB)**

</td></tr>
</table>

Courier Press, Leamington Spa, England.

## Description

The present invention relates to object manipulators of the type used in robots or other automatic equipment to manipulate or handle objects such as work pieces or tools under program or remote control. An object manipulator includes a gripper with one or more fingers which engage with the object, and the present invention relates in particular to the provision of tools adapted to be mounted on the fingers.

An object manipulator serves as a general purpose handling facility for tasks such as lifting, transporting, orienting and holding objects, for example work pieces and tools which perform special operations on work pieces. The gripper of the manipulator is provided with fingers having surfaces for engaging the objects required to be manipulated. To achieve the versatility required from the manipulator, the object engaging surfaces of the fingers of the gripper cannot be too specialised. It has been known to provide specialised surfaces which are semi-permanently mounted in place on the gripper, for example by screws, to do a particular repetitive job not requiring maximum versatility. Otherwise, tasks requiring specialised handling are accomplished by using general purpose fingers on the gripper to hold a specialised tool. Examples of such tools are vacuum pickup devices for delicate or small objects and specially configured jaw assemblies for grasping objects having curved or irregular surfaces.

A manipulator of the above type includes a gripper control system. Some forms of gripper control system have the ability of sensing the object by means of sensing devices in the fingers of the gripper. When a manipulator of this type uses a specialised tool as described above to engage with an object, much of the ability of the gripper control system to sense the object through the sensing devices in its fingers is eliminated or at least compromised.

FR—A—1 328 613 describes an object manipulator having two tools each mounted on a respective finger. Each tool is formed with a recess substantially the same size and shape as the finger, so that each tool fits closely over its associated finger. Each tool is held in place on its associated finger by means of a pin. When the tools are used to grip an object the cooperating surfaces of the fingers and the tools are pressed together so that a frictional force is generated between these cooperating surfaces. This force tends to prevent each tool from moving off its associated finger during the gripping operation.

Each finger and cooperating recess are substantially circular in cross section with slightly different diameters and the cooperating surfaces are the outer cylindrical surface of each finger and the inner cylindrical surface of each recess. Due to the difference in the diameters of the cooperating cylindrical surfaces, when these surfaces are pressed together during the gripping operation, only a relatively small portion of each surface is in contact with the other cooperating surface. Therefore the frictional force generated between the cooperating surfaces is relatively small.

The object of the present invention is to provide an object manipulator in which the tools for the fingers are closely related physically with the fingers and act as part of the fingers so as to maintain the ability of the manipulator to grip the object and yet are easily removed and changed.

The present invention relates to an object manipulator of the type which comprises:
a gripper formed with at least two fingers mounted for relative movement in a first pair of opposite directions so as to be able to grip an object to be manipulated by exerting opposing forces on the object in the first pair of opposite directions,
control means for controlling the relative movement of the fingers,
at least one tool mounted on a respective one of the fingers and adapted to engage with the object,
yieldable means on the tool and its associated finger for retaining the tool in position on the finger, and
cooperating surfaces on the tool and its associated finger adapted to allow the tool to be moved in a second pair of opposite directions substantially at right angles to the first pair of opposite directions on and off the finger, and
to prevent relative movement between the tool and the finger in any direction other than the second pair of opposite directions,
whereby, when the tools grip an object by exerting opposing forces on the object in the first pair of opposite directions, the cooperating surfaces are pressed together so as to generate a frictional force between these surfaces, which force is exerted on the tool and the finger so that any relative movement between the tool and the finger in said second pair of opposite directions is resisted and the tool is prevented from moving off its associated finger during the gripping operation.

According to the invention the manipulator is characterised in that:
the cooperating surfaces comprise,
a first set of plane surfaces on the finger forming substantially the whole of the surface of the finger and extending in the second pair of opposite directions, and
a second set of plane surfaces on the tool forming substantially the whole of the surface of a recess in the tool and extending in the second pair of opposite directions.

The tool fits closely onto its associated finger but can easily be moved on and off the finger. When the finger is used to grip an object the frictional force exerted results in the tool fitting more closely onto the finger. Consequently the tool operates correctly to grip the object during subsequent movement of the gripper.

If the gripper includes a sensing device in the finger, since the tool fits closely onto the finger, the use of the tool does not adversely affect the operation of the sensing device.

The features and advantages of the present invention will be apparent to those skilled in the art from the following description of a preferred embodiment of the invention, wherein reference is made to the Figures in the accompanying drawings, in which:

Figure 1 is a simplified perspective view of a robot including an object manipulator with which the present invention may be used,

Figure 2 is an enlarged perspective view of the gripper of the object manipulator used in the robot of Figure 1 which has been constructed in accordance with the present invention to receive interchangeable finger tools,

Figure 3 is an enlarged perspective exploded view of one finger of the gripper illustrated in Figure 2, together with a finger tool constructed in accordance with the present invention, and

Figure 4 is a fragmentary perspective view of a holder for the finger tool illustrated in Figure 3 which facilitates the installation and removal of the finger tool from the gripper.

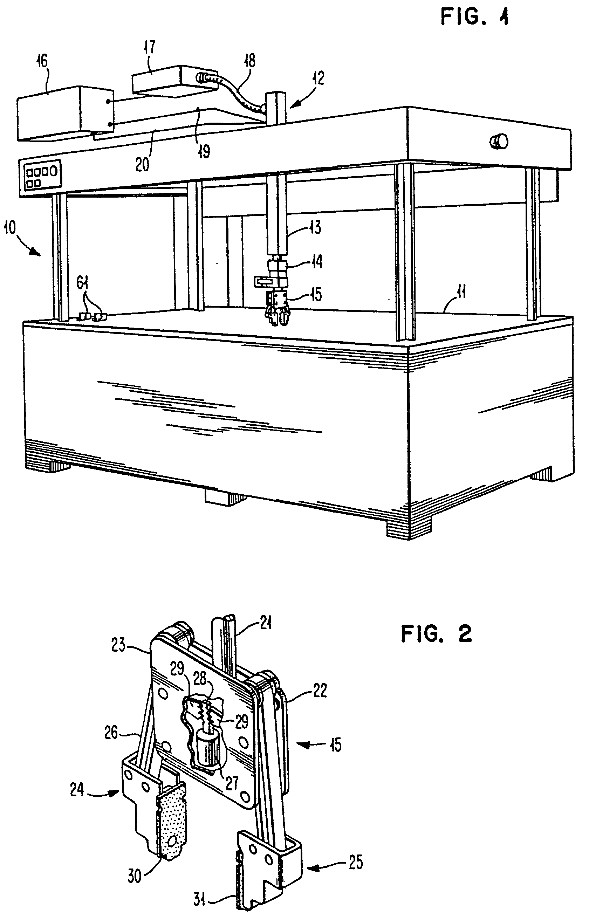

A robot 10, as shown in Figure 1, is of the type marketed by International Business Machines Corporation under the name of the IBM 7565 Manufacturing System. Except for the gripper details as hereinafter described, the remainder of the robot, including its control system, is known to those skilled in the art.

Robot 10 comprises a table 11 having an electrically powered overhead carriage assembly 12 which supports an arm 13 for movement in the mutually perpendicular X, Y and Z directions throughout the space over table 11.

Arm 13 carries at its lower end a hydraulically powered object manipulator including an articulated wrist mechanism 14 and a gripper 15 by which objects such as work pieces and tools can be held and manipulated. The arm 13 and wrist mechanism 14 enable gripper 15 to be moved and oriented as required, to perform a variety of tasks.

The control of gripper 15 is accomplished through use of a computer 16 which controls a hydraulic power source 17, connected through a hydraulic line 18 to various operating units in the arm 13. Electrical power for driving motors to operate the overhead carriage assembly 12 is delivered through an electrical line 19 from the control computer 16. Feedback signals from various sensors within the gripper 15 and elsewhere in the robot 10 are delivered to the computer 16 through a cable 20.

The details of the gripper 15 are better illustrated in Figure 2. The gripper 15 is supported on a shaft 21 from the wrist mechanism 14 and includes a frame structure formed by plates 22 and 23, and a pair of opposed fingers 24 and 25 extending in the direction of the axis of shaft 21. Each of the fingers 24, 25 is suspended from the frame structure by a pair of articulated parallel links 26. The links 26 are mounted in such a way as to enable the fingers 24 and 25 to remain parallel in the direction of the axis of the shaft 21 while moving relative to one another in a direction perpendicular to the axis of the shaft 21.

The links 26 are operated and controlled by a hydraulic motor 27, mounted within the frame structure, which displaces a rack 28 to drive a pair of sector gears 29 connected to the links 26. The hydraulic motor 27 is controlled by the computer 16 through the hydraulic power source 17. The fingers 24 and 25 are moved in and out in the direction perpendicular to the axis of the shaft 21 by the rotation of the gears 29 and thus are operable to grasp objects by the controlled mutual force developed therebetween.

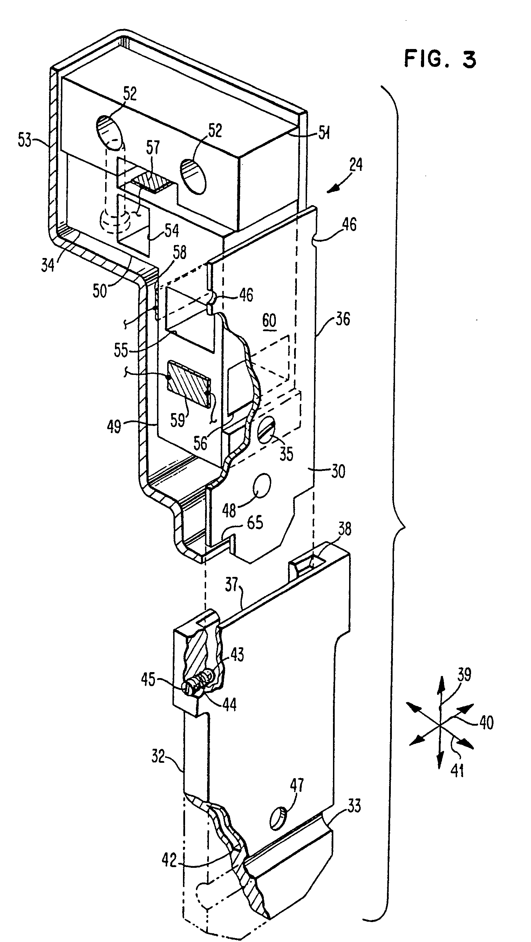

The fingers 24 and 25 each having a rectangular plate or finger pedestal 30, 31 for receiving the changeable finger tools in accordance with the present invention as is illustrated in Figure 3, which illustrates in detail the construction of finger 24 including a finger tool 32.

The finger tool 32 illustrated in Figure 3 is configured for the lifting of a cylindrical object by being formed with a groove 33 near its lower end and is adapted to be mounted on finger pedestal 30. The finger pedestal 30 is secured to a flexure arm 34 by key means (not shown) and by a screw 35, so as to present a substantially unencumbered peripheral edge 36. Finger tool 32 comprises a slot 37 which is shaped and sized to match the pedestal 30 including its peripheral edge 36 so that the tool 32 will fit closely over the pedestal 30. The slot 37 is formed with a chamfered or angled lead portion 38 at its upper end to facilitate the insertion of the pedestal 30 into the slot 37. Axes 39, 40, 41 represent three mutually perpendicular directions in which the gripper 15 can be moved. The pedestal 30 fits closely into the slot 37 so as to permit the tool 32 to slide onto pedestal 30 along the direction of axis 39 which resisting relative movement between the tool and the pedestal along the directions of axes 40 and 41. The slot 37 is formed with a stop surface 42, shown in the broken-away portion of finger tool 32, which engages a shoulder 65 of pedestal 30 to enable force to be transmitted along axis 39 from the pedestal 30 to the finger tool 32.

While the arrangement illustrated provides for a close fit between the pedestal 30 and the finger 32 by causing the slot 37 formed in the tool to cooperate with the edge 36 of the pedestal, the close fit can be implemented in other ways. For example, the slot and edge can be reversed with the slot in the pedestal and the cooperating edge on the tool. It is important that the fitting arrangement be such that when the tool 32 is in operation gripping an object this will cause frictional engagement between the mating portions of the pedestal 30 and the tool 32.

Near the upper end of slot 37, there is provided a detent ball 43, retained in a socket or bore containing a spring 44 and plug 45. A similar ball is provided, but is not visible, in the opposite edge of slot 37. Detent balls 43 cooperate with detent recesses 46 near the upper edge of pedestal 30 to retain the finger tool 32 in place on the pedestal and to assist the shoulder 65 to position the finger tool 32 precisely with respect to the pedestal 30. Precise positioning is required, for example, to ensure that an opening in the finger 32 such as 47 aligns with a photo transistor 48 carried by the pedestal 30 and a light source on the pedestal 31 of the opposite finger 25 so as to provide for optical vision between the fingers 24 and 25. The curved surfaces of the balls 43 serve both to assist in positioning the tool 32 precisely on the pedestal 30 and to permit engagement and release of the finger tool 32 by simple sliding movement relative to the pedestal 30 against the resistance of the springs 44 which can be varied by adjusting the positions of the plugs 45.

The flexure arm 34 comprises a downwardly extending leg 49 on which pedestal 30 is mounted, and a horizontal leg 50 which is attached at its upper and outward end to a bearing block 51, to which the parallel links 26 are pivotally attached through pivot bores 52. A casing or shroud 53 covers the arm 34. This shroud has been broken away to show the formation of cut-out portions 54, 55 and 56 in the legs 49, 50. These cut-out portions extend close to the surface of the associated leg 49, 50 so as to provide three thin sections of the arm 34, on the outer surfaces of which are mounted strain gauges 57, 58 and 59. When the gripper is in operation gripping and moving an object, forces may be exerted on the object in various directions by interaction between the object in the gripper and other objects and these forces are transmitted to each of the fingers 24, 25 resulting in the deformation of each of the flexure arms 34. This deformation, which occurs particularly in the thin sections adjacent to the strain gauges 57, 58 and 59, causes the strain gauges to deform and sense the interaction of the object in the gripper with other objects and to develop feedback signals to be sent back on the cable 20 to the computer 16.

In operation, the finger tool 32, when installed, moves and operates with pedestal 30 in the same manner as if the finger tool has been positively affixed to the pedestal. When the hydraulic motor 27 is controlled by computer 16 to apply a sufficient gripping force between the fingers 24 and 25 to grip an object, frictional engagement between the inner surface of the slot 37 in the finger tool 32 and the edge 36 and the mating surface 60 of the pedestal 30 is developed and this resists any slippage of the finger tool 32 relative to the pedestal. These mating surfaces can be finished as desired to enhance such frictional holding force. However, a normal machine finish has been found to be adequate for many tasks.

The close fitting arrangement of the finger tool 32 on the pedestal 30 and the cooperation of the shoulder 65 on the pedestal 30 with the stop surface 42 on the finger tool, with the assistance of the detent balls 43, ensure that, when the fingers 24, 25 are performing a gripping operation on an object, the frictional and other forces between the finger tool 32 and the pedestal 30 prevent any relative movement between the finger tool and pedestal during movement of the fingers in any one of the directions defined by the axes 39, 40, 41.

To securely resist undesired movement of the finger tools relative to the pedestals of the two fingers 24, 25, the force between the fingers exerted by gripping an object should be of the order of two to three times the weight of the object being gripped and manipulated. The robots commercially offered, as mentioned above, are arranged to nominally provide a gripping force that is three times the lifting force.

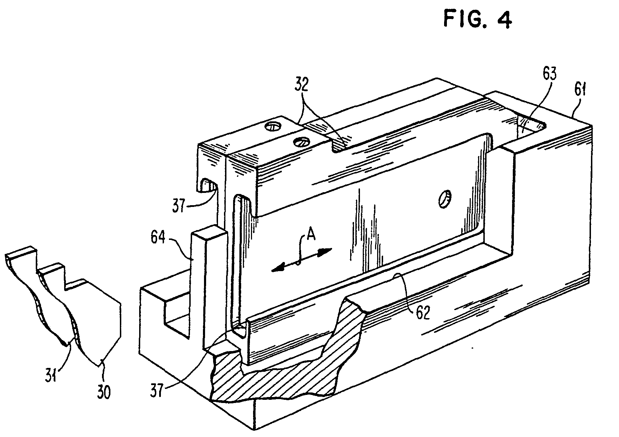

Figure 4 shows a finger tool holder 61 for enabling the automatic installation on and removal from the pedestals 30 and 31 of a pair of finger tools. Two such tool holders 61 are shown in Figure 1 as would be used by an object manipulator requiring two pairs of finger tools to perform its assigned tasks. Holder 61 has a body portion which is formed with an upwardly extending rim 62 which defines an upwardly facing open recess 63 adapted to contain the pair of finger tools 32. The recess 63 surrounds the lower edges of the finger tools 32 while exposing the slots 37 at the left side of the holder. The rim 62 prevents the finger tools 32 from being moved horizontally in the directions indicated by the arrow A while the tools 32 are free to be moved vertically into and out of recess 63.

When the finger tools 32 are to be installed on pedestals 30 and 31, the gripper 15 is rotated until the fingers 24, 25 extend horizontally with the surfaces 60 in a vertical plane. The pedestals 30, 31 are then simply slid into respective slots 37 by further horizontal movement of the gripper. The fingers 24, 25 and the pedestals 30, 31 are then moved vertically upwards in order to raise the pair of finger tools 32 out of the recess 63. The finger tools will be retained on the fingers by the action of the detent balls 43 so that during subsequent movements of the fingers the tools will remain in position on the fingers. If the ends of the fingers are used to push an object without actually gripping the object the finger tools will remain in position by the action of the shoulders 65 on the pedestals abutting against the stop surfaces 42 on the finger tools. If the gripper is used to grip an object the finger tools will be pressed against the mating surfaces 60 of the pedestals causing a frictional force to be exerted on each finger tool. This frictional force, together with the other reaction forces between each pedestal and its associated finger tool due to the close fit of each finger tool on its associated pedestal, will prevent any relative movement between each finger tool and its associated pedestal during the subsequent manipulation of the gripped object.

When it is desired to remove the finger tools 32, the motion is reversed. Thus, the gripper 15 is moved to bring the finger tools 32, extending horizontally with the surfaces 60 of the pedestals 30, 31 in a vertical plane, downwardly into the recess 63. Pedestals 30 and 31 are then moved horizontally and, since the recess 63 holds the finger tools 32 against horizontal motion, the finger tools 32 will be stripped from the pedestals 30 and 31 against the action of the detent balls 43.

A post 64 is provided to prevent canting or rotation of the finger tools 32 as they are being stripped from the pedestals 30 and 31.

It will be appreciated that, with the arrangements described above, the finger tools 32 can be placed on and removed from the fingers 24, 25 by a simple process and the finger tools will remain in position on the fingers during operation of the gripper. The finger tools can be stored in holders like holder 61 and operation of the gripper will enable the finger tools to be placed on the fingers, removed from the holder and subsequently replaced in the holder.

## Claims

1. An objet manipulator comprising:

a gripper (15) formed with at least two fingers (24, 25) mounted for relative movement in a first pair of opposite directions so as to be able to grip an object to be manipulated by exerting opposing forces on said object in said first pair of opposite directions,

control means (16) for controlling the relative movement of said fingers,

at least one tool (32) mounted on a respective one of said fingers and adapted to engage with said object,

yieldable means (43, 44, 45) on said tool and its associated finger for retaining said tool in position on said finger, and

cooperating surfaces on said tool and its associated finger adapted,

to allow said tool to be moved in a second pair of opposite directions substantially at right angles to said first pair of opposite directions on and off said finger, and

to prevent relative movement between said tool and said finger in any direction other than the said second pair of opposite directions,

whereby, when said tools grip an object by exerting opposing forces on said object in said first pair of opposite directions, said cooperating surfaces are pressed together so as to generate a frictional force between these surfaces, which force is exerted on said tool and said finger so that any relative movement between said tool and said finger in said second pair of opposite directions is resisted and said tool is prevented from moving off its associated finger during the gripping operation, characterised in that:

said cooperating surfaces comprise,

a first set of plane surfaces (36) on said finger forming substantially the whole of the surface of said finger and extending in said second pair of opposite directions, and

a second set of plane surfaces (37, 38) on said tool forming substantially the whole of the surface of a recess in said tool and extending in said second pair of opposite directions.

2. An object manipulator as claimed in Claim 1 characterised in that:

said finger comprises a flat plate (30) mounted on a pedestal, the surfaces of which plate and pedestal form said first set of plane surfaces, and said recess in said tool is substantially the same size and shape as said plate and pedestal combination.

3. An object manipulator as claimed in Claim 2 characterised in that the cross-sections of said plate and pedestal combination and of said recess are both T-shaped.

## Patentansprüche

1. Gegenstandsmanipulator

mit einem Greifer (15), der mit zumindest zwei Fingern (24, 25) ausgebildet ist, die zur Relativbewegung in einem ersten Paar engegengesetzter Richtungen angeordnet sind, sodaß sie den zu manipulierenden Gegenstand ergreifen können, indem sie in dem ersten Paar entgegengesetzter Richtungen entgegengesetzte Kräfte auf den Gegenstand ausüben,

mit Steuermitteln (16) zur Steuerung der Relativbewegung der Finger,

mit zumindest einem Werkzeug (32), das an dem jeweiligen Finger angeordnet und zum Angreifen an dem Gegenstand ausgebildet ist,

mit nachgehenden Mitteln (43, 44, 45) auf dem Werkzeug und dem ihm zugeordneten Finger, um das Werkzeug auf dem Finger in seiner Lage zurückzuhalten, und

mit zusammenwirkenden Flächen auf dem Werkzeug und dem ihm zugeordneten Finger, die dazu geeignet sind, daß

das Werkzeug in ein zweites Paar entgegengesetzter Richtungen, das im wesentlichen senkrecht zu dem ersten Paar entgegengesetzter Richtungen verläuft, bewegt sowie von dem Finger wegbewegt werden kann und

eine Relativbewegung zwischen Werkzeug und Finger in jeder Richtung, ausgenommen jener des zweiten Paares von entgegengesetzten Richtungen, verhindert wird,

wobei, falls die Werkzeuge einen Gegenstand ergreifen, indem sie in dem ersten Paar entgegengesetzter Richtungen auf den Gegenstand entgegengesetzte Kräfte ausüben, die zusammenwirkenden Flächen gegeneinander gepreßt werden, um eine Reibungskraft zwischen diesen Flächen zu erzeugen, die auf das Werkzeug und den Finger ausgeübt wird, sodaß jeder Relativbewegung zwischen dem Werkzeug und dem Finger in dem zweiten Paar entgegengesetzter Richtungen Widerstand geleistet und verhindert wird, daß sich das Werkzeug während des Greifvorganges von dem zugehörigen Finger löst, dadurch gekennzeichnet, daß

die zusammenwirkenden Flächen aufweisen,

auf dem Finger einen ersten Satz ebener Flächen (36), die im wesentlichen die gesamte Oberfläche des Fingers bilden und sich in dem zweiten Paar entgegengesetzter Richtungen erstrecken, und auf dem Werkzeug einen zweiten Satz ebener Flächen (37, 38), die im wesentlichen die gesamte Oberfläche einer Ausnehmung in dem Werkzeug bilden und sich in dem zweiten Paar entgegengesetzter Richtungen erstrecken.

2. Gegenstandsmanipulator nach Anspruch 1, dadurch gekennzeichnet, daß der Finger eine flache Platte (30) aufweist, die auf einem Sockel montiert ist, wobei die Oberfläche von Platte und Sockel den ersten Satz ebener Flächen bilden, und die Ausnehmung in dem Werkzeug . im wesentlichen die gleiche Abmessung und Form aufweist, wie die Kombination von Platte und Sockel.

3. Gegenstandsmanipulator nach Anspruch 2, dadurch gekennzeichnet, daß die Querschnitte der Kombination von Platte und Sockel und der Ausnehmung beide T-förmig sind.

**Revendications**

1. Manipulateur d'objets, comprenant:

un dispositif de préhension (15) comportant au moins deux doigts (24, 25) montés pour un mouvement relatif dans une première paire de directions opposées de façon à pouvoir saisir un objet à manipuler, par application de forces opposées sur ledit objet dans ladite première paire de directions opposées,

des moyens de commande (16) pour commander le mouvement relatif desdits doigts,

au moins un outil (32) fixé à un desdits doigts et prévu pour venir en contact avec ledit objet,

des moyens d'enclenchement élastique (43, 44, 45) prévus sur ledit outil et son doigt associé, pour retenir ledit outil en position sur ledit doigt, et

des surfaces coopérantes sur ledit outil et son doigt associé, qui sont appropriées pour permettre audit outil de se déplacer dans une deuxième paire de directions opposées, sensiblement perpendiculaires à ladite première paire de directions opposées, et d'être déplacé par ledit doigt, ainsi que pour empêcher un mouvement relatif entre ledit outil et ledit doigt dans une direction autre que ladite deuxième paire de directions opposées, de sorte que, lorsque les outils saisissent un objet par application de forces opposées sur ledit objet dans ladite première paire de directions opposées, lesdites surfaces coopérantes sont pressées ensemble pour engendrer une force de frottement entre ces surfaces qui s'exerce sur ledit outil et ledit doigt de manière à s'opposer à tout mouvement relatif entre ledit outil et ledit doigt dans ladite deuxième paire de directions opposées et à empêcher que ledit outil se sépare de son doigt associé pendant l'opération de préhension, caractérisé en ce que lesdites surfaces coopérantes comprennent:

un premier ensemble de surfaces planes (36) sur ledit doigt, constituant sensiblement la totalité de la surface dudit doigt et s'étendant dans ladite deuxième paire de directions opposées, et

un deuxième ensemble de surfaces planes (37, 38) sur ledit outil, constituant sensiblement la totalité de la surface d'un logement dans ledit outil et s'étendant dans ladite deuxième paire de directions opposées.

2. Manipulateur d'objets suivant la revendication 1, caractérisé en ce que:

ledit doigt comprend une plaque plane (30) montée sur un support, les surfaces de cette plaque et du support formant ledit premier ensemble de surfaces planes, et

ledit logement dans ledit outil a sensiblement la même dimension et la même forme que ladite combinaison de la plaque et du support.

3. Manipulateur d'objets suivant la revendication 2, caractérisé en ce que les sections transversales de ladite combinaison de plaque et de support et dudit logement sont toutes deux en forme de T.

FIG. 1

FIG. 2

1

FIG. 3

FIG. 4